# EUROPÄISCHE PATENTSCHRIFT

(11) **EP 2 561 779 B1**
(45) Veröffentlichungstag und Bekanntmachung des Hinweises auf die Patenterteilung: **12.03.2014**
(21) Anmeldenummer: 12193184.4
(22) Anmeldetag: 29.03.2010
(51) Int. Cl.: A47J 31/36

(54) **Brüheinrichtung für eine Kaffeemaschine**
Brewing device for a coffee machine
Dispositif-infuseur pour une machine à café

(43) Veröffentlichungstag der Anmeldung: 27.02.2013
(62) Teilanmeldung aus: 10158164.3
(73) Patentinhaber: Schaerer AG, 4528 Zuchwil (CH)
(72) Erfinder: Sinzig, Peter, 3302 Zuchwil (CH)
(74) Vertreter: Rentsch Partner AG

(56) Entgegenhaltungen:
- EP-A1- 2 080 456
- WO-A1-2010/100600
- DE-C1- 3 843 568

## Beschreibung

Die vorliegende Erfindung bezieht sich auf eine Brüheinrichtung für eine Kaffeemaschinegemäss dem Oberbegriff des Anspruchs 1.

Derartige Brüheinrichtungen für Kaffeemaschinen sind bekannt.

So zeigt beispielsweise die EP 0 528 758 B1 eine Brüheinrichtung, bei welcher die Brühkammer durch einen Brühzylinder und einen oberen und unteren Kolben gebildet werden. Der obere Kolben ist hierbei feststehend, der Brühzylinder und der untere Kolben sind verfahrbar, gesteuert über eine entsprechend angeordnete Spindel. Zum Einfüllen des Kaffeepulvers in die Brühkammer befinden sich der untere Kolben und der Brühzylinder in der unteren Position, das Kaffeepulver wird über einen zuschwenkbaren Trichter in die Brühkammer eingefüllt, der Brühzylinder und der untere Kolben fahren während des Wegschwenkens des Trichters nach oben, der Brühzylinder wird durch den oberen Kolben verschlossen, in die geschlossene Brühkammer wird heisses Wasser zugeführt, der gebrühte Kaffee wird über entsprechende Leitungen an eine Tasse ausgegeben.

Der obere Kolben und der untere Kolben sind mit einem Sieb abgedeckt, um eine optimale Verteilung des zugeführten heissen Wassers und eine Wegführung des gebrühten Kaffees zu erreichen. Hierzu müssen von Zeit zu Zeit die Brühkammer und insbesondere die Siebe der beiden Kolben gereinigt werden.

Um eine gründliche Reinigung vornehmen zu können, ist es erforderlich, dass die Siebe aus dem Kolben entfernt werden, was jeweils durch Lösen der entsprechenden Verschraubungen mit den erforderlichen Werkzeugen ausgeführt werden kann. Es kann auch erforderlich sein, dass die Siebe nach längerem Gebrauch ausgewechselt werden müssen. Dieses Reinigen und Auswechseln der Siebe ist aufwändig.

Die Druckschrift EP 2 080 456 A1 offenbart eine Kaffeemaschine mit einem topfartigen, nach oben offenen Brühbehälter, der oben durch einen Kopf dicht verschlossen werden kann. In den Kopf ist ein Bolzen eingeschraubt, der gleichzeitig eine Wasserverteilplatte gegen den Kopf drückend fixiert. Ein einfaches Herausnehmen der Wasserverteilplatte ohne Werkzeug ist nicht möglich.

Die Druckschrift DE 38 43 568 C1 beschreibt einen Kaffeemaschinenautomaten mit einer Brühvorrichtung in Form eines Rohrabschnitts, der mittels eines oberen Verschlussstücks verschliessbar ist. Das obere Verschlussstück ist zweiteilig ausgebildet. Es weist einen Tragteil und einen Zentrierteil auf. Der Zentrierteil weist einen Dichtungsträger auf, der dem Tragteil zugekehrt mit der Anschlagschraube befestigt ist. Der Dichtungsträger weist Durchbrechungen auf, die sich jeweils an die umlaufende Nut im Tragteil anschliessen und zu einem Hohlraum führen, der von dem Sieb überspannt ist. Dieses Sieb besitzt auf seinem Umfang eine konische Fläche, die in Verbindung mit dem oberen Rand des Rohrabschnitts die Selbstzentrierung herbeiführt. Das Sieb ist durch einen Presssitz an dem Dichtungsträger gelagert.

Ein unteres Verschlussstück ist nach Art eines Kolbens mit seiner Dichtung im Bereich des Innendurchmessers des Rohrabschnitts gelagert und wird ausschliesslich vertikal und innerhalb des Rohrabschnitts verfahren. Mit dem unteren Verschlussstück ist ebenfalls ein Sieb verbunden, dem ein Hohlraum nachgeordnet ist, der in eine Bohrung übergeht. Das untere Sieb ist ebenfalls mittels Presssitz auf dem Verschlussstück fixiert. Beide Siebe sind daher nicht auf einfache Weise ohne Werkzeug austauschbar.

Die Druckschrift WO 2010/100600 A1 bezieht sich auf einen Brühkolben für einen Brühvorgang, der einen Kopf mit einem Filterelement und einer ebenen Oberfläche mit wenigstens einer Dichtung aufweist. Der kopf m it dem Filterelement ist mittels einer Schraube in einen Träger eingeschraubt.

Die Aufgabe der vorliegenden Erfindung besteht somit damit, die Brüheinrichtung mit den beiden Kolben so auszugestalten, dass ein einfaches Herausnehmen der Siebe ohne zusätzliche Werkzeuge ermöglicht wird und dadurch ein einfaches Reinigen und Auswechseln dieser Siebe erreichbar ist.

Erfindungsgemäss erfolgt die Lösung dieser Aufgabe durch die Gesamtheit der Merkmale des Anspruchs 1.

Mit dieser Ausgestaltung, nämlich dass die Kolben jeweils mit einem Tragteil für das entsprechende Sieb ausgestattet sind, wobei diese Tragteile in einfacher Weise in die Kolben einsetzbar und aus diesen herausnehmbar sind, können die Siebe in einfacher Weise aus den in der Brüheinrichtung angeordneten Kolben herausgenommen und gereinigt oder ausgewechselt werden. Mit dieser Ausgestaltung ist es auch möglich, die Tragteile auszuwechseln, diese können dann durch Tragteile ersetzt werden, die beispielsweise andere Wasserzuführungen und Kaffeewegführungen aufweisen, wodurch die Qualität des zu brühenden Kaffees beeinflusst werden kann. Die Tragteile mit den entsprechend angebrachten Sieben können, wie bereits erwähnt wurde, sehr einfach in die Kolben eingesetzt und aus diesen entfernt werden, auch wenn die jeweiligen Kolben nicht optimal zugänglich sind.

Dabei weist der Tragteil einen zylinderförmigen Bereich auf, welcher in einen entsprechenden hohlzylinderförmigen Bereich des Kolbens einsetzbar und über Verriegelungsmittel gehalten ist, wodurch ein einfacher und kostengünstiger Aufbau erhalten wird.

Auch sind die Verriegelungsmittel aus am zylinderförmigen Bereich des Tragteils angebrachten Nocken und aus am hohlzylinderförmigen Bereich des Kolbens angebrachten längsverlaufenden und an diese anschliessend in Umfangsrichtung verlaufenden Ausnehmungen gebildet. Dadurch wird eine optimale Führung des Tragteils beim Einsetzen bzw. Herausnehmen in bzw. aus dem Kolben erreicht, was die Bedienung entsprechend vereinfacht.

In vorteilhafter Weise ist die verriegelte Position des Tragteils in Kolben durch Anschlagflächen festgelegt, wodurch angezeigt wird, wenn die verriegelte Position erreicht ist.

Eine weitere vorteilhafte Ausgestaltung der Erfindung besteht darin, dass am Tragteil mindestens eine radial verlaufende, schraubenlinienförmig angeordnete schiefe Ebene angebracht ist, die mit einem Bolzen zusammenwirkt, der im Kolben in axialer Richtung verschiebbar angeordnet ist, und dessen eine Stirnfläche über Federmittel gegen die schiefe Ebene in eine vordere Position drückbar ist. Dadurch wird erreicht, dass der in den Kolben eingesetzte Tragteil über den federnd gehaltenen Bolzen in die verriegelte Position gedrückt wird.

In vorteilhafter Weise ist die vordere Position des Bolzens durch einen Anschlag begrenzt.

Eine weitere vorteilhafte Ausgestaltung der Erfindung besteht darin, dass am Tragteil zwei einander gegenüberliegende radial verlaufende, schraubenlinienförmig angeordnete schiefe Ebenen angebracht sind, die mit zwei in axialer Richtung verschiebbar im Kolben angeordnete Bolzen zusammen wirken, deren eine Stirnflächen über Federmittel gegen die schiefen Ebenen in eine vordere Position drückbar sind. Dadurch wird eine optimale Verdrehung zum Verriegeln des Tragteils im Kolben erhalten, die beiden über Federmittel gegen die schiefen Ebenen gedrückten Bolzen ergänzen sich in optimaler Weise.

In vorteilhafter Weise sind die beiden Bolzen parallel verlaufend an einem ringförmigen Tragelement einander diagonal gegenüberliegend angebracht, welches Tragelement das axial verlaufende Verbindungselement umschliesst und welches Tragelement durch eine an das Verbindungselement umschliessende Druckfeder beaufschlagt ist, welche durch das Verbindungselement haltende Stege abgestützt ist. Durch diese Anordnung wird ein einfacher Aufbau erhalten.

Eine weitere vorteilhafte Ausgestaltung der Erfindung besteht darin, dass am Tragelement hakenförmige Elemente angeordnet sind, welche in der vorderen Position des Tragelements und somit der Bolzen an den Anschlägen abgestützt sind, wodurch neben einem einfachen Aufbau auch eine optimale Funktion erreichbar ist.

Eine Ausführungsform der Erfindung wird nachfolgend anhand der beiliegenden Zeichnung beispielhaft näher erläutert.

Es zeigt
Fig. 1 eine Schnittdarstellung einer Brüheinrichtung für eine Kaffeemaschine mit oberem Kolben, Brühzylinder und unterem Kolben;
Fig. 2 in räumlicher Darstellung den unteren Kolben mit separatem, zum unteren Kolben gehörendem Tragteil;
Fig. 3 bis 5 die einzelnen Schritte zum Aufsetzen des Tragteils auf den unteren Kolben bis in die verriegelte Position;
Fig. 6 in räumlicher Darstellung den oberen Kolben mit auseinandergezogenen Einzelteilen;
Fig. 7a bis 7d in schematischer Darstellung die Funktionsweise des Einsetzens des Tragteils in den oberen Kolben mit automatischer Verriegelung;
Fig. 8a bis 8d in schematischer Darstellung die Funktionsweise des Wegnehmens des Tragteils vom oberen Kolben;
Fig. 9 eine räumliche Darstellung des oberen Kolbens mit weggenommenem Tragteil; und
Fig. 10a bis 10d jeweils eine Schnittdarstellung des oberen Kolbens beim Einsetzen des Tragteils in den oberen Kolben.

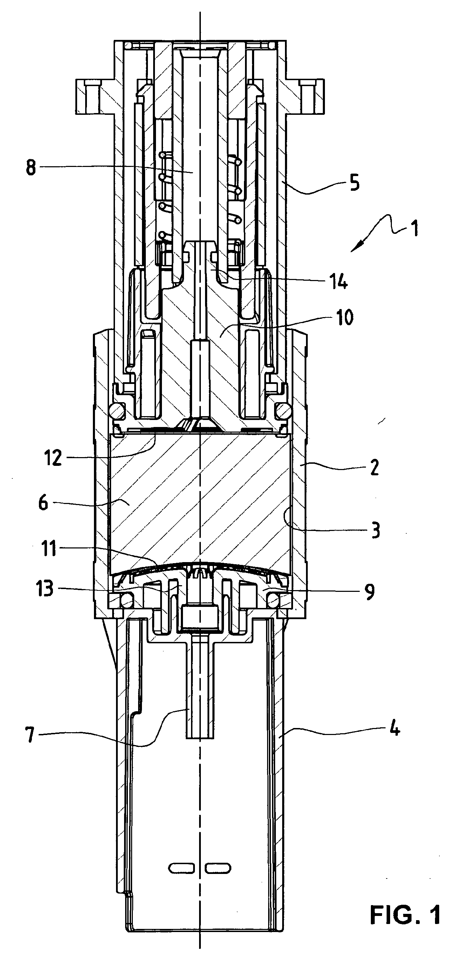

Wie aus Fig. 1 ersichtlich ist, besteht die Brüheinrichtung 1 für eine Kaffeemaschine in bekannter Weise aus einem Brühzylinder 2, der mit einer zylindrischen Bohrung 3 versehen ist, welche zylindrische Bohrung 3 durch einen unteren Kolben 4 und einen oberen Kolben 5 verschliessbar ist, wodurch in bekannter Weise die Brühkammer 6 gebildet wird.

In bekannter Weise wird zum Herstellen eines Kaffees die Brühkammer 6 geöffnet, indem der Brühzylinder 2 mit dem unteren Kolben 4 aus dem oberen Kolben 5, der feststehend ist, ausgefahren wird. In die Brühkammer 6 kann dann in bekannter Weise von oben durch einen nicht dargestellten Trichter Kaffeepulver in die Brühkammer 6 eingefüllt werden, der untere Kolben 4 zusammen mit dem Brühzylinder fahren hoch, bis die Brühkammer 6 durch den oberen Kolben 5 abgeschlossen ist. Über den Verbindungskanal 7 des unteren Kolbens 4 wird Wasser in die Brühkammer 6 eingepresst, der in der Brühkammer 6 gebrühte Kaffee verlässt die Brühkammer 6 durch den Verbindungskanal 8 des oberen Kolbens. Durch Herunterfahren des Brühzylinders 2 und Hochfahren des unteren Kolbens 4 wird nach dem Brühvorgang der in der Brühkammer 6 sich befindende Kaffeepulverkuchen ausgestossen.

Auf den der Brühkammer 6 zugewandten Endbereich des unteren Kolbens 4 ist ein Tragteil 9 lösbar aufgesetzt, wie später noch im Detail beschrieben wird. Auf den der Brühkammer 6 zugewandten Endbereich des oberen Kolbens 5 ist ebenfalls ein Tragteil 10 lösbar aufgesetzt, wie ebenfalls später noch im Detail beschrieben wird. Beide Tragteile 9 und 10 sind jeweils mit einem Sieb 11 bzw. 12 abgedeckt, die in bekannter Weise am jeweiligen Tragteil 9 bzw. 10 befestigt sind. Im Tragteil 9 des unteren Kolbens ist ein Anschlusselement 13 vorgesehen, welches mit dem Verbindungskanal 7 des unteren Kolbens dichtend verbunden ist, so dass das zugeführte Wasser über den Verbindungskanal 7, das Anschlusselement 13 und das Sieb 11 in die Brühkammer 6 gelangen kann.

In entsprechender Weise ist der Tragteil 10 des oberen Kolbens 5 ebenfalls mit einem Anschlusselement 14 ausgestattet, das entsprechend mit dem Verbindungskanal 8 des oberen Kolbens 5 dicht verbunden ist, so dass der gebrühte Kaffee durch das Sieb 12, das Anschlusselement 14 des oberen Kolbens 5 und den Verbindungskanal 8 des oberen Kolbens 5 abgeführt werden kann.

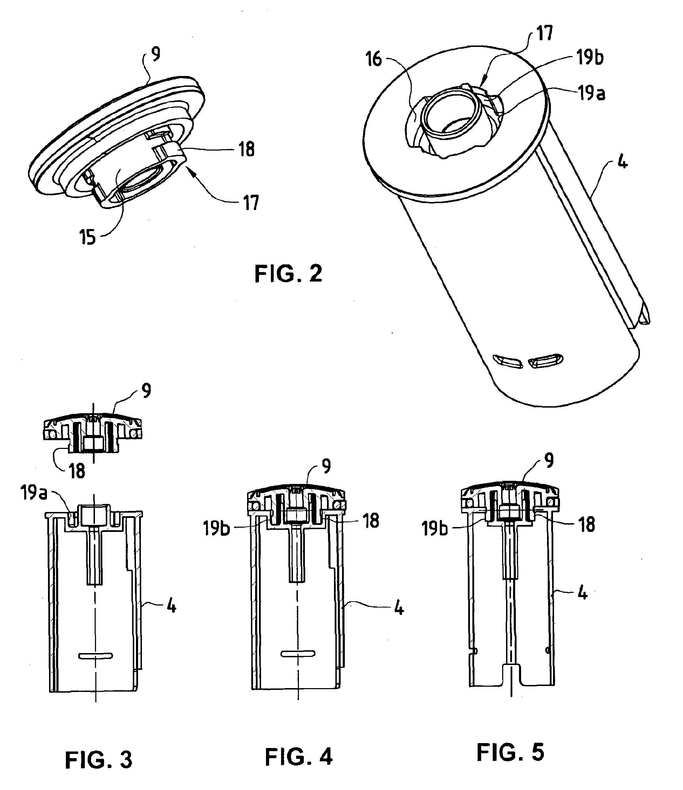

Aus Fig. 2 ist der untere Kolben 4 und der davon getrennte Tragteil 9 ersichtlich. Der Tragteil 9 weist einen zylinderförmigen Bereich 15 auf, welcher in einen entsprechenden hohlzylinderförmigen Bereich 16 des unteren Kolbens 4 eingesetzt werden kann. Im auf den unteren Kolben 4 aufgesetzten Zustand wird der Tragteil 9 über Verriegelungsmittel 17 gehalten. Diese Verriegelungsmittel bestehen aus am Tragteil 9 angebrachten Nocken 18 und am hohlzylinderförmigen Bereich 16 des unteren Kolbens 4 angebrachten, längsverlaufenden Ausnehmungen 19a und an diese anschliessend in Umfangsrichtung verlaufenden Ausnehmungen 19b.

Wie aus den Fig. 3 bis 5 ersichtlich ist, werden beim Aufsetzen des Tragteils 9 auf den unteren Kolben 4 die Nocken 18 in die längsverlaufenden Ausnehmungen 19a des unteren Kolbens 4 eingeführt, der Tragteil 9 wird dann bezüglich des unteren Kolbens 4 verdreht, die Nocken 18 gelangen in die in Umfangsrichtung verlaufenden Ausnehmungen 19b, der Tragteil 9 ist dadurch mit dem unteren Kolben 4 verbunden und befindet sich im verriegelten Zustand. Zum Lösen des Tragteil 9 vom unteren Kolben 4 wird dieser bezüglich des unteren Kolbens 4 verdreht, bis die Nocken 18 in die längsverlaufenden Ausnehmungen 19a gelangen, der Tragteil 9 kann dann aus dem unteren Kolben 4 abgehoben werden.

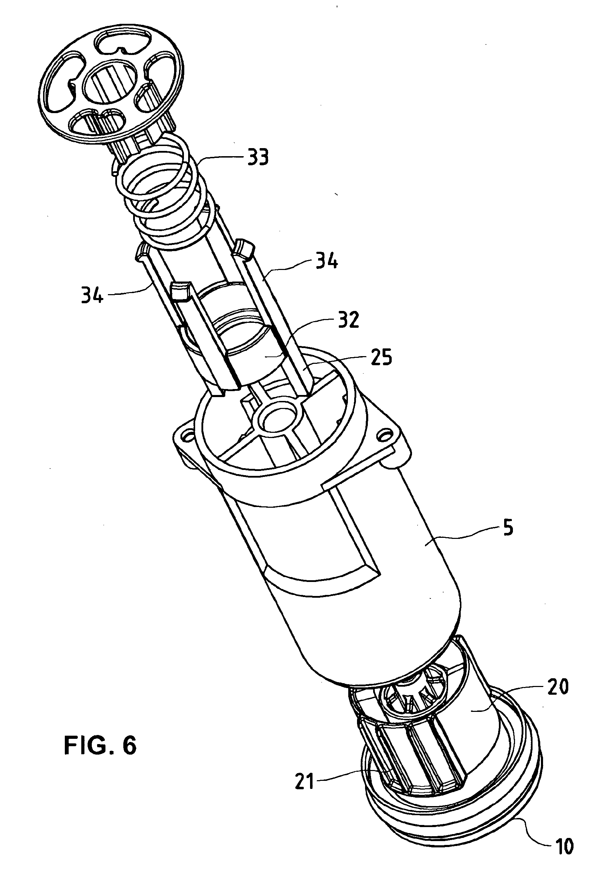

Fig. 6 zeigt in räumlicher Darstellung den oberen Kolben 5, wobei der Tragteil 10 aus dem oberen Kolben 5 ausgefahren ist, wobei zusätzlich die weiteren Bauteile in separater Darstellung ersichtlich sind. Der Tragteil 10 weist ebenfalls einen zylinderförmigen Bereich 20 auf, an dem die Verriegelungsmittel in Form von Nocken 21 angebracht sind. Wie später noch gesehen wird, werden zum Einsetzen des Tragteils 10 in den oberen Kolben 5 diese Nocken in Ausnehmungen eingefahren, die längsverlaufend angeordnet sind, durch Verdrehen des Tragteils 10 gelangen die Nocken 21 danach in in Umfangsrichtung verlaufende Ausnehmungen, wodurch die Verriegelung erfolgt.

Der Tragteil 10 des oberen Kolbens 5 wird bei der hier dargestellten Ausführungsform automatisch in die verriegelte Position gezogen, wie nachfolgend beschrieben wird.

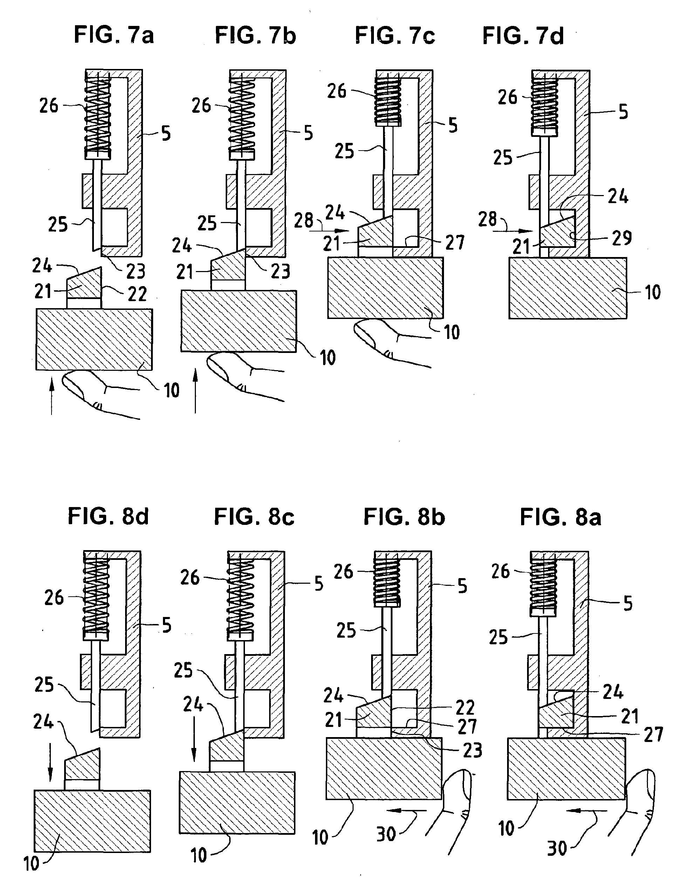

In den Fig. 7a bis 7d ist die Funktionsweise dieser automatischen Verriegelung schematisch dargestellt. Der Tragteil 10 wird in den oberen Kolben 5 eingefahren, dargestellt in Fig. 7a. Hierbei gelangt die Seitenfläche 22 des Nockens 21 an die Ausnehmung 23 des oberen Kolbens 5 und wird in Längsrichtung geführt, wie dies aus Fig. 7b ersichtlich ist. Während des Einfahrens des Tragteils 10 in den oberen Kolben 5 kommt eine am Tragteil 10 angebrachte schiefe Ebene 24 in Kontakt mit einem längsverschiebbaren Bolzen 25, der über Federmittel 26 gegen die schiefe Ebene 24 des Tragteils 10 gedrückt wird.

Der Bolzen 25 weicht nach oben aus, wie in den Fig. 7b und 7c ersichtlich ist, der Tragteil 10 wird soweit in den oberen Kolben 5 eingedrückt, bis der Nocken 21 in die in Umfangsrichtung verlaufende Ausnehmung 27 gelangt, und horizontal in Richtung des Pfeils 28 verschoben werden kann, bewirkt durch das federnde Drücken des Bolzens 25 auf die schiefe Ebene 24 des Tragteils 10. Der Tragteil 10 wird hierbei solange verschoben, bis der Nocken 21 an einer Anschlagfläche 29 des oberen Kolbens 5 zur Anlage kommt. Der Tragteil 10 befindet sich hierdurch in der verriegelten Position und wird in dieser gehalten.

Das Herausnehmen des Tragteils 10 aus dem oberen Kolben 5 ist in den Fig. 8a bis 8d schematisch dargestellt. Hierbei wird der Tragteil 10 bezüglich des oberen Kolbens 5 in Richtung des Pfeils 30 verschoben, über die schiefe Ebene 24 wird der Bolzen 25 entgegen der Federkraft der Federmittel 26 nach oben gedrückt, bis die Seitenfläche 22 mit der Ausnehmung 23 fluchtend ist. Die Federmittel 26 drücken den Bolzen 25 gegen die schiefe Ebene 24, der Nocken 21 des Tragteils 10 kann entlang der Ausnehmung 23 nach unten verlaufen, der Tragteil 10 wird aus dem oberen Kolben 5 ausgestossen und kann weggenommen werden.

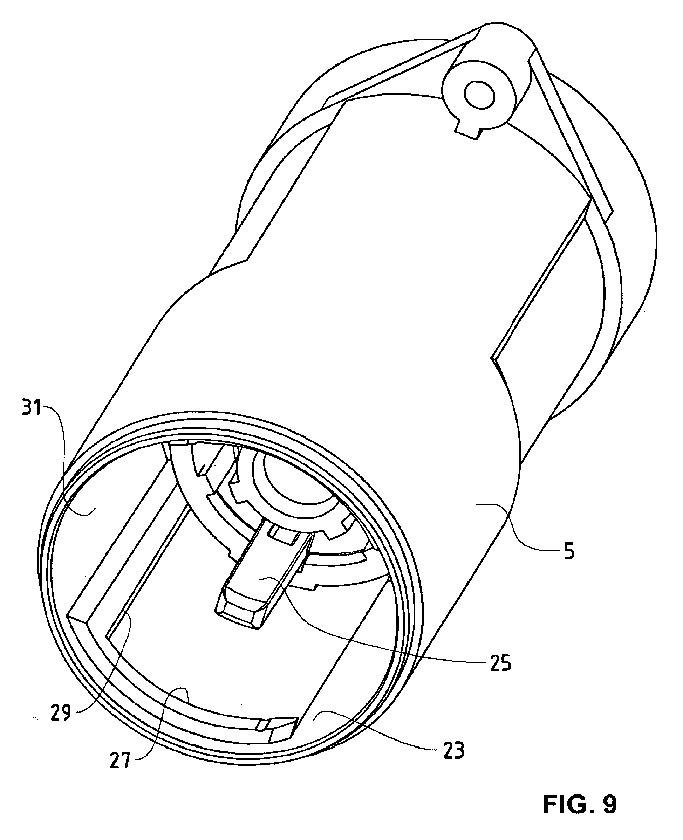

Fig. 9 zeigt in räumlicher Darstellung den oberen Kolben 5 mit weggenommenem Tragteil 10. In diesem oberen Kolben 5 ist der hohlzylinderförmige Bereich 31 angebracht, in diesem hohlzylinderförmigen Bereich 31 ist die längs verlaufende Ausnehmung 23 und die in Umfangsrichtung verlaufende Ausnehmung 27 ersichtlich. Ebenfalls ersichtlich in diesem hohlzylinderförmigen Bereich 31 ist einer der beiden Bolzen 25, die federnd gegen unten gedrückt werden. Ebenfalls ersichtlich ist die Anschlagfläche 29, welche die verriegelte Position des Tragteils begrenzt.

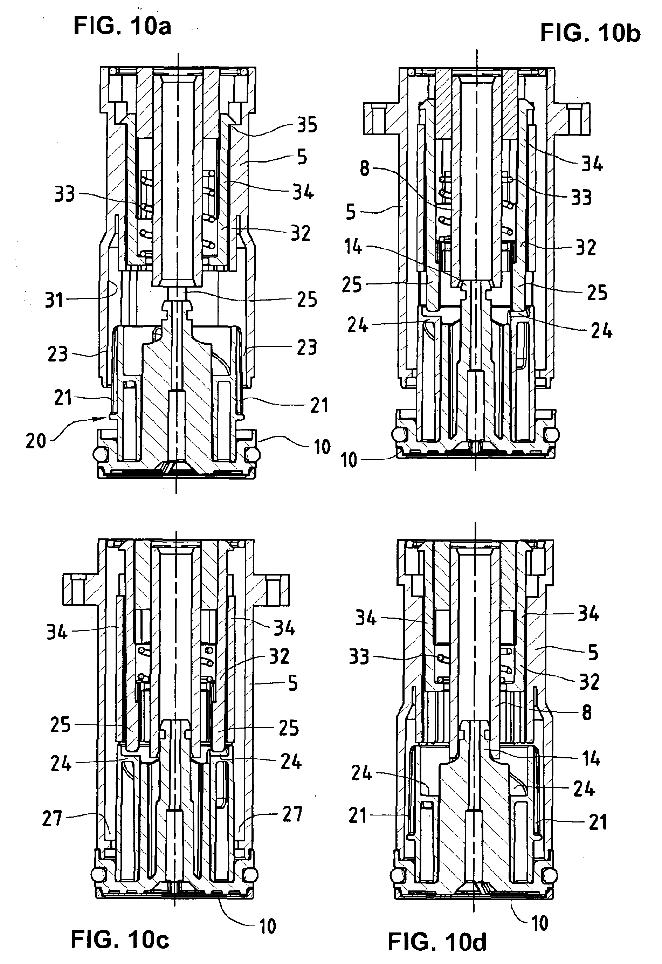

Aus den Fig. 10a bis 10d ist das Einsetzen des Tragteils 10 in den oberen Kolben 5 ersichtlich. Gemäss Fig. 10a wird der Tragteil 10 mit seinem zylinderförmigen Bereich 20 in den hohlzylinderförmigen Bereich 31 des oberen Kolbens 5 eingeführt. Die Nocken 21 des Tragteils 10 sind durch die längs verlaufenden Ausnehmungen 23 gegen Verdrehung geführt. Die Bolzen 25 befinden sich in der vorderen Position. Wie aus Fig. 6 ersichtlich ist, sind die beiden Bolzen 25 an einem ringförmigen Tragelement 32 gehalten, das das axial verlaufende Verbindungselement 8 des oberen Kolbens 5 umschliesst. Dieses ringförmige Tragelement 32 wird über eine Druckfeder 33 in die vordere Position gedrückt. Am ringförmigen Tragelement 32 sind hakenförmige Elemente 34 angebracht, welche Anschlagelemente bilden.

Wie aus Fig. 10a ersichtlich ist, befindet sich das ringförmige Tragelement 32 mit den daran angebrachten Bolzen 25 in der vorderen Position, welche durch die hakenförmigen Elemente 34 begrenzt ist, die sich auf Anschlägen 35, angebracht am oberen Kolben 5, abstützen. Das ringförmige Tragelement 32 wird über die Druckfeder 33 in die vordere Position gedrückt.

Wie aus Fig. 10b ersichtlich ist, in welcher der obere Kolben 5 und der Tragteil 10 bezüglich der Darstellung gemäss Fig. 10a um 90° gedreht sind, wird der Tragteil 10 weiter in den oberen Kolben 5 eingedrückt, die Bolzen 25 stützen sich auf den schiefen Ebenen 24 des Tragteils 10 ab, und werden zusammen mit dem ringförmigen Tragelement 32 und den hakenförmigen Elementen 34 in den oberen Kolben 5 hineingedrückt. Bei diesem weiteren Hineindrücken gelangt das Anschlusselement 14 des Tragteils 10 in den Verbindungskanal 8 des oberen Kolbens 5.

Der Tragteil 10 wird vollständig in den oberen Kolben 5 eingeschoben, wie dies in Fig. 10c dargestellt ist. Die Bolzen 25 sind vollständig zurückgeschoben, die Nocken gelangen in den Bereich der in Umfangsrichtung verlaufenden Ausnehmung 27 (Fig. 9), ebenfalls dargestellt in Fig. 10d, bei welcher der obere Kolben 5 und der Tragteil 10 gegenüber der Darstellung gemäss Fig. 10c wiederum um 90° gedreht ist. Durch den Druck der Bolzen 25 auf die schiefen Ebenen 24 entsteht ein Drehmoment auf den Tragteil 10, da die Nocken 21 des Tragteils 10 sich im Bereich der in Umfangsrichtung verlaufenden Ausnehmung 27 (Fig. 9) befinden, wird der Tragteil 10 verdreht, bis die Nocken 21 an den Anschlagflächen 29 zur Anlage kommen, der Tragteil 10 ist mit dem oberen Kolben 5 verriegelt, das Anschlusselement 24 ist dichtend mit dem Verbindungskanal 8 des oberen Kolbens 5 verbunden, der obere Kolben 5 kann somit zur Herstellung eines Kaffees eingesetzt werden.

Zum Wegnehmen des Tragteils 10 vom oberen Kolben 5 wird in umgekehrter Reihenfolge vorgegangen, entsprechend dem Vorgang, wie er zu den Fig. 8a bis 8d beschrieben worden ist.

In der vorgängigen Beschreibung wurde für den unteren Kolben und dem an diesem unteren Kolben angebrachten Tragteil eine einfache Verbindung dargestellt, während für den oberen Kolben und den darin einsetzbaren Tragteil ein praktisch automatisierter Verriegelungsmechanismus beschrieben wurde. Es können aber auch beide Kolben mit einem Tragteil mit praktisch automatisierter Verriegelungseinrichtung eingesetzt werden. Idealerweise wird der praktisch automatisierte Verriegelungsmechanismus dort eingesetzt, wo die Zugänglichkeit zum Kolben zum Einsetzen des Tragteils erschwert ist.

Mit dieser erfindungsgemässen Ausgestaltung wird eine Brüheinrichtung erhalten, bei welcher die an den jeweiligen Kolben angebrachten Siebe in einfachster Weise ausgetauscht werden können, sei dies zur Reinigung der Siebe, sei dies auch darum, um gegebenenfalls die Wasserzuführung bzw. das Wegführen des gebrühten Kaffees durch entsprechende Anordnung der Wasserkanäle in den Tragteilen zu verändern und an den zu beziehenden Kaffee anzupassen.

## Patentansprüche

1. Brüheinrichtung für eine Kaffeemaschine, umfassend einen Brühzylinder (2) mit einer zylindrischen Bohrung (3), einen oberen Kolben (5) und einen unteren Kolben (4), durch welche der Brühzylinder (2) zur Bildung einer Brühkammer (6) abschliessbar ist, wobei der Brühzylinder (2) und die Kolben (4, 5) relativ zueinander verschiebbar und antreibbar angeordnet sind, und die der Brühkammer (6) zugewandte Fläche des oberen Kolbens (5) und des unteren Kolbens (4) jeweils mit einem Sieb (11, 12) ausgestattet sind, durch welche jeweils über einen im jeweiligen Kolben (4, 5) angebrachten Verbindungskanal (7, 8) heisses Wasser in die Brühkammer (6) einleitbar oder Kaffee aus der Brühkammer (6) ableitbar ist, wobei mindestens eines der Siebe (11, 12) auf einem Tragteil (9, 10) angebracht ist, welcher auf einen der Kolben (4, 5) aufsetzbar und mit diesem verriegelbar ist und welcher Tragteil (9, 10) mit einem Anschlusselement (13, 14) versehen ist, welches mit dem Verbindungskanal (7, 8) des jeweiligen Kolbens (4, 5) dichtend verbindbar ist, und wobei der Tragteil (9, 10) einen zylinderförmigen Bereich (15, 20) aufweist, welcher in einen entsprechenden hohlzylinderförmigen Bereich (16, 31) des Kolbens (4, 5) einsetzbar und über Verriegelungsmittel (17) gehalten ist, **dadurch gekennzeichnet, dass** die Verriegelungsmittel (17) aus am zylinderförmigen Bereich (15,20) des Tragteils (9, 10) angebrachten Nocken (18, 21) und aus am hohlzylinderförmigen Bereich (16, 31) des Kolbens (4, 5) angebrachten längs verlaufenden Ausnehmungen (19a, 23) und an diese anschliessend in Umfangsrichtung verlaufenden Ausnehmungen (19b, 27) gebildet sind.

2. Brüheinrichtung für eine Kaffeemaschine nach Anspruch 1, **dadurch gekennzeichnet, dass** die verriegelte Position des Tragteils (9, 10) im Kolben (4, 5) durch Anschlagflächen festgelegt ist.

3. Brüheinrichtung für eine Kaffeemaschine nach einem der Ansprüche 1 und 2, **dadurch gekennzeichnet, dass** am Tragteil (10) mindestens eine radial verlaufende, schraubenlinienförmig angeordnete schiefe Ebene (24) angebracht ist.

4. Brüheinrichtung für eine Kaffeemaschine nach Anspruch 3, **dadurch gekennzeichnet, dass** im Kolben (5) ein in axialer Richtung verschiebbar angeordneter Bolzen (25) gehalten ist, dessen eine Stirnfläche über Federmittel (26) gegen die schiefe Ebene (24) in eine vordere Position drückbar ist.

5. Brüheinrichtung für eine Kaffeemaschine nach Anspruch 4, **dadurch gekennzeichnet, dass** die vordere Position des Bolzens (25) durch einen Anschlag (29) begrenzt ist.

6. Brüheinrichtung für eine Kaffeemaschine nach Anspruch 3, **dadurch gekennzeichnet, dass** am Tragteil (10) zwei einander gegenüberliegende radial verlaufende, schraubenlinienförmig angeordnete schiefe Ebenen (24) angebracht sind.

7. Brüheinrichtung für eine Kaffeemaschine nach Anspruch 6, **dadurch gekennzeichnet, dass** im Kolben (5) zwei in axialer Richtung verschiebbar angeordnete Bolzen (25) gehalten sind, deren eine Stirnflächen über Federmittel (26) gegen die schiefen Ebenen (24) in eine vordere Position drückbar sind.

8. Brüheinrichtung für eine Kaffeemaschine nach Anspruch 7, **dadurch gekennzeichnet, dass** die beiden Bolzen (25) parallel verlaufend an einem ringförmigen Tragelement (32) einander diagonal gegenüberliegend angebracht sind, welches Tragelement (32) das axial verlaufende Verbindungselement (8) umschliesst und welches Tragelement (32) durch eine das Verbindungselement (8) umschliessende Druckfeder (33) beaufschlagt ist, welche durch das Verbindungselement (8) haltende Stege abgestützt ist.

9. Brüheinrichtung für eine Kaffeemaschine nach Anspruch 8, **dadurch gekennzeichnet, dass** am Tragelement (32) hakenförmige Elemente (34) angeordnet sind, welche in der vorderen Position des Tragelements (32) und somit der Bolzen (25) an den Anschlägen (29) abgestützt sind.

## Claims

1. Brewing arrangement for a coffee machine, comprising a brewing cylinder (2) with a cylindrical bore (3), and also comprising an upper piston (5) and a lower piston (4), by means of which the brewing cylinder (2) can be shut off in order to form a brewing chamber (6), wherein the brewing cylinder (2) and the pistons (4, 5) are arranged such that they can be driven and displaced relative to one another, and that surface of the upper piston (5) and of the lower piston (4) which is directed towards the brewing chamber (6) is provided in each case with a sieve (11, 12) through which, in each case via a connecting channel (7, 8) fitted in the respective piston (4, 5), hot water can be directed into the brewing chamber (6) or coffee can be directed out of the brewing chamber (6), wherein at least one of the sieves (11, 12) is fitted on a carrying part (9, 10), which can be positioned on one of the pistons (4, 5) and can be locked thereto and which carrying part (9, 10) comprises a cylindrical region (15, 20), which is introducible into a corresponding hollow-cylindrical region (16, 31) of the piston (4, 5) and is retained via locking means (17), **characterized in that** the locking means (17) are formed by protuberances (18, 21) fitted to the cylindrical region (15, 20) of the carrying part (9, 10) and by longitudinally running recesses (19a, 23), provided on the hollow-cylindrical region (16, 31) of the piston (4, 5), and circumferentially running recesses (19b, 27), which adjoin the longitudinally running recesses.

2. Brewing arrangement for a coffee machine according to Claim 1, **characterized in that** the locked position of the carrying part (9, 10) in the piston (4, 5) is defined by stop surfaces.

3. Brewing arrangement for a coffee machine according either of Claims 1 to 2, **characterized in that** the carrying part (10) is provided with at lest one radially running, helically arranged slanting plane (24).

4. Brewing arrangement for a coffee machine according to Claim 3, **characterized in that** an axially displaceably arranged bolt (25) is retained in the piston (5), one end surface of which bolt may be pressed, via spring means (26), against the slanting plane (24) into a forward position.

5. Brewing arrangement for a coffee machine according to Claim 4, **characterized in that** the forward position of the bolt (25) is delimited by a stop (29).

6. Brewing arrangement for a coffee machine according to Claims 3, **characterized in that** the carrying part (10) is provided with two radially running, helically arranged slanting planes (24) located opposite one another.

7. Brewing arrangement for a coffee machine according to Claim 6, **characterized in that** two axially displaceably arranged bolts (25) are retained in the piston (5), the end surfaces of which bolts may be pressed, via spring means (26), against the slanting planes (24) into a forward position.

8. Brewing arrangement for a coffee machine according to Claim 7, **characterized in that** the two bolts (25) are fitted diagonally opposite one another, and parallel to one another, on an annular carrying element (32), which carrying element (32) encloses the axially running connecting element (8) and which carrying element (32) can be subjected to the action of a compression spring (33), which encloses the connecting element (8) and is supported by crosspieces which retain the connecting element (8).

9. Brewing arrangement for a coffee machine according to Claim 8, **characterized in that** hook-like elements (34) are arranged on the carrying element (32) and, in the forward position of the carrying element (32) and thus of the bolts (25), are supported on the stops (29).

## Revendications

1. Dispositif infuseur pour une machine à café, comportant un cylindre infuseur (2) doté d'un alésage cylindrique (3), un piston supérieur (5) et un piston inférieur (4) au moyen desquels le cylindre infuseur (2) peut être fermé pour former une chambre d'infusion (6), le cylindre infuseur (2) et les pistons (4, 5) étant disposés de manière à pouvoir être entraînés et à pouvoir coulisser les uns par rapport aux autres, et les surfaces du piston supérieur (5) et du piston inférieur (4) tournées vers la chambre d'infusion (6) étant équipées respectivement d'un filtre (11, 12) à travers lequel filtre respectif, par l'intermédaire d'un canal de liaison (7, 8) respectif réalisé dans le piston respectif (4, 5), de l'eau chaude peut être introduite dans la chambre d'infusion (6) ou du café peut être évacué hors de la chambre d'infusion (6), au moins l'un des filtres (11, 12) étant monté sur une partie de support (9, 10), laquelle partie de support peut être placée sur l'un des pistons (4, 5) et peut être verrouillée sur ce dernier et laquelle partie de support (9, 10) est munie d'un élément de raccordement (13, 14) qui peut être relié de manière étanche au canal de liaison (7, 8) du piston respectif (4, 5), et la partie de support (9, 10) comprenant une région de forme cylindrique (15, 20) qui peut être insérée dans une région de forme cylindrique creuse (16, 31) correspondante du piston (4, 5) et est retenue au moyen de moyens de verrouillage (17), **caractérisé en ce que** les moyens de verrouillage (17) sont formés à partir d'ergots (18, 21) réalisés sur la région de forme cylindrique (15, 20) de la partie de support (9, 10) et à partir d'évidements (19a, 23) s'étendant longitudinalement réalisés sur la région cylindrique creuse (16, 31) du piston (4, 5) et d'évidements (19b, 27) s'étendant dans la direction périphérique et se raccordant à ceux-ci.

2. Dispositif infuseur pour une machine à café selon la revendication 1, **caractérisé en ce que** la position verrouillée de la partie de support (9, 10) dans le piston (4, 5) est déterminée par des surfaces de butée.

3. Dispositif infuseur pour une machine à café selon l'une quelconque des revendications 1 et 2, **caractérisé en ce qu'**au moins un plan incliné (24) disposé sous forme hélicoïdale et s'étendant radialement étant réalisé sur la partie de support (10).

4. Dispositif infuseur pour une machine à café selon la revendication 3, **caractérisé en ce qu'**une cheville (25) disposée de manière coulissante dans la direction axiale est retenue dans le piston (5), l'une des surfaces frontales de cette cheville pouvant être pressée dans une position avant contre le plan incliné (24) au moyen de moyens de ressort (26).

5. Dispositif infuseur pour une machine à café selon la revendication 4, **caractérisé en ce que** la position avant de la cheville (25) est limitée par une butée (29).

6. Dispositif infuseur pour une machine à café selon la revendication 3, **caractérisé en ce que** deux plans inclinés (24) opposés l'un à l'autre, s'étendant radialement et disposés sous forme hélicoïdale sont réalisés sur la partie de support (10).

7. Dispositif infuseur pour une machine à café selon la revendication 6, **caractérisé en ce que** deux chevilles (25) pouvant coulisser dans la direction axiale sont retenues dans le piston (5), l'une des surfaces frontales de ces chevilles pouvant être pressée dans une position avant contre le plan incliné (24) au moyen de moyens de ressort (26).

8. Dispositif infuseur pour une machine à café selon la revendication 7, **caractérisé en ce que** les deux chevilles (25) sont montées sur un élément de support annulaire (32) de manière diamétralement opposée l'une à l'autre et en s'étendant parallèlement, lequel élément de support (32) entoure l'élément de liaison (8) s'étendant axialement et lequel élément de support (32) est sollicité par un ressort de compression (33) entourant l'élément de liaison (8), lequel ressort de compression est supporté par des nervures retenant l'élément de liaison (8).

9. Dispositif infuseur pour une machine à café selon la revendication 8, **caractérisé en ce que** des éléments en forme de crochets (34) sont disposés sur l'élément de support (32), lesquels éléments en forme de crochets s'appuient sur les butées (29) dans la position avant de l'élément de support (32) et donc des chevilles (25).
